**Europäisches Patentamt**

(19) **European Patent Office**

**Office européen des brevets**

(11) Publication number: **0 134 108**
**B1**

(12) **EUROPEAN PATENT SPECIFICATION**

(45) Date of publication of patent specification: **05.04.89**

(21) Application number: **84305188.9**

(22) Date of filing: **30.07.84**

(51) Int. Cl.⁴: **B 01 J 7/02** // B64D41/00

(54) Gas generator and method of generating gas.

(30) Priority: **17.08.83 US 524047**
**17.08.83 US 524048**
**17.08.83 US 524049**

(43) Date of publication of application:
**13.03.85 Bulletin 85/11**

(45) Publication of the grant of the patent:
**05.04.89 Bulletin 89/14**

(84) Designated Contracting States:
**BE DE FR GB IT NL**

(56) References cited:
**FR-A-2 455 184**
**US-A-3 871 828**
**US-A-4 069 664**
**US-A-4 352 782**
**ASTRONAUTICS AND AERONAUTICS, vol. 14, no. 3, March 1976, pages 47-57, New York, US; O.S. WILLIAMS et al.: "Liquid rockets in perspective. Developments in the 1960s"**

(73) Proprietor: **ALLIED-SIGNAL INC.**
**Columbia Road and Park Avenue P.O. Box 2245R**
**Morristown New Jersey 07960 (US)**

(72) Inventor: **Kasabian, George**
**7335 Ogelsby Avenue**
**Los Angeles California (US)**
Inventor: **Weigand, Francis K.**
**5103, Scott Street**
**Torrance California 90503 (US)**
Inventor: **Nickel, William H.**
**77, Rockinghorse Road**
**Rancho Palos Verdes California 90274 (US)**
Inventor: **Ness, Ronald James**
**2293, Adrienne**
**Corona California 91720 (US)**

(74) Representative: **Rees, David Christopher et al**
**Kilburn & Strode 30 John Street**
**London WC1N 2DD (GB)**

Courier Press, Leamington Spa, England.

## Description

Gas generators suitable as emergency power units for military aircraft, are usually small, lightweight, intermittent duty power supply devices which ensure instant, reliable power output even after relatively long dormant periods. Such gas generators typically utilise a pulsed spray of liquid hydrazine into a catalyst bed such as Shell 405, in which production of hot gas occurs. The gas generated by the device may then be used to drive a turbine wheel, which may power such devices as engine starters, electrical generators, and hydraulic pumps.

Gas generators for military applications are designed to be reusable, with only a minimal amount of maintenance being required between uses. It is therefore desirable that the gas generator be capable of a consistent and reliable level of performance involving repeated usage over an extended period of time without requiring major overall, rebuilding, or replacement of the catalyst.

In one arrangement, the catalyst in the gas generator is located in two distinct beds, a primary bed into which the liquid hydrazine is introduced by a spray nozzle, and a secondary bed interposed between the primary bed and the location in the generator at which the gas generated exists. The liquid hydrazine initially decomposes into a gas in the first catalyst bed, and the characteristics of the gas existing the device are determined as the gas travels through the second catalyst bed, reaching a high temperature. Liquid hydrazine is supplied to the gas generator at a pressure of 100—400 p.s.i., and gas leaving the generator is at approximately the same pressure. The gas generator is therefor controlled by the amount of liquid hydrazine sprayed into the catalyst beds, which amount determines the volume of gas produced by the gas generator, and therefore controls the speed at which a turbine driven by the gas generator will operate.

In order to precisely control the operating speed of the turbine, liquid hydrazine may be pulsed into the catalyst bed rather than supplied in a continuous flow. Alternatively, liquid hydrazine may be metered into the catalyst bed at a rate sufficient to provide the required output power. The speed of the turbine is controlled by varying the rate at which the liquid hydrazine is pulsed or metered into the gas generator.

Since the system may operate an electric generator required to operate at a particular frequency, it is desirable to have precise control of the speed of the turbine for example by control of the volume and other characteristics of the gas produced by the gas generator.

While the technique of pulsing the liquid hydrazine into the gas generator is highly desirable due to the precise degree of control possible over the power output of the device, the pulsing operation has proven to be extremely destructive to the catalyst beds, drastically limiting the life of the gas generator. The hydrazine liquid pulsed into the gas generator causes an oscillatory movement in the catalyst beds resulting in destructive vibration of the catalyst, which is in the form of particles having a particular size and shape. The vibration in the catalyst beds causes the particles to be broken down into less useful, smaller particles, and finally into dust. The vibration problem is particularly destructive in the primary bed, which is situated immediately adjacent the spray nozzles through which the liquid hydrazine is introduced into the gas generator. As the catalyst particles in the primary bed break up, the dust produced migrates into the secondary bed, which becomes clogged rapidly by the dust, thus increasing the pressure drop across the gas generator. The vibration problem in the primary bed is so severe as to cause significant abrasion on the interior of the gas generator.

Another factor in the problem is the ambient temperature at which the gas generator is operating. While catalyst degradation is merely unsatisfactory at ambient temperatures of 70°F (21°C), at lower ambient operating temperature the catalyst breakdown rate drastically increases to reduce the expected life of the gas generator and diminishing the performance of the gas generator as an engine start device giving slower turbine acceleration, increasing start time, and drastic catalyst weight loss through increasing oscillatory vibration.

Although failure of the gas generator resulting in possible loss of an aircraft is of paramount importance, another major concern in premature catalyst degradation is the high cost of rebuilding the gas generator and replacing the catalyst.

Thus, it can be seen that a strong need exists for a gas generator having sufficient catalyst life to allow the generator to be reused a large number of times while requiring only minimal maintenance between uses. The gas generator must be capable of functioning reliably at low temperatures, and of providing multiple starts at these low temperatures. Finally, it is desirable that whatever solution is found is capable of retrofitting to existing gas generators.

The present invention is based on a design preventing or hindering oscillatory vibration by allowing for compaction and degradation of the catalyst, so that the catalyst bed(s) can be suitably biassed and automatically compensation for the permitted motion of the bed(s) can be achieved.

According to the invention, a gas generator has a housing containing a porous bed of granular catalyst material, a wall movable in the housing for confining the catalyst bed, and adjustable locking means for limiting movement of the wall which would allow expansion of the bed, whereby vibration of the wall is hindered or inhibited.

In a first embodiment, the present invention prevent destructive oscillatory vibration by allowing only one-way movement of a secondary catalyst bed toward a primary catalyst bed, thereby allowing for compaction and degradation of the catalyst while effectively preventing oscillatory vibration. The one-way travel of the secondary bed toward the primary bed thus prebiases the catalyst beds and allows springs also used to bias the secondary bed against the primary bed to be effective in minimising wear in the catalyst beds during operation of the gas generator.

In Daly's US Patent Specification No. 4,352,782 a radially inward compression member is provided to restribute a catalyst bed as voids develop in use.

In a catalyst bed described in Astronautics and Aeronautics Vol. 14 No. 3 of March 1976, a catalyst bed is described on page 53 — the Marquardt thruster — which has a thermal spring for compacting the bed axially.

However, in each case the compression member can resile to permit vibration.

The present invention improves upon those proposals by the adjustable locking means which can prevent vibrating movement beyond an adjustable point set by adjustment – manual or automatic – of the locking means.

The hardware used to prevent movement of the secondary catalyst bed away from the primary bed includes a load nut threadably secured to the housing and bearing against the secondary catalyst bed to prevent the secondary catalyst bed from moving away from the primary catalyst bed. A jam nut is threadly secured to the housing and advanced into firm engagement with the load nut to prevent both nuts from retreating on the threads of the housing. The nuts are designed to be adjusted to compensate between uses for compaction or bed degradation in the primary catalyst bed, the adjusting being made by advancing or retracting the nuts individually relative to one another by use of separate torque tubes or tools readily inserted inside the gas generator after each use thereof.

The nuts may be adjusted quickly and conveniently without disassembling the gas generator. After each use of a gas generator, it is necessary to replace a shear pin sealing the interior of the gas generator from contamination, and the nuts may be adjusted in a matter of seconds at the time the shear pin is replaced.

In a second embodiment, the invention contemplates inclusion of a locking means for preventing motion of the bed in a second direction opposing the first direction induced by the spring load, which locking means are automatically extensible in length in response to movement of the bed in the first direction to maintain the locking action thereof. This may be accomplished by inclusion of a pin and a sleeve within the interior of one or more of the coil biasing springs. The pin is biased by the spring to move in the first direction with the bed, thereupon sliding within the interior of the sleeve, and the sleeve is secured by the spring to the stationary housing. A locking element lockingly interengages the interior of the sleeve and a ramped surface on the pin. The locking element is lightly biased into such interengagement and follows the pin in its spring-induced movement in the first direction to continue prevention of return motion in the second direction.

In a third embodiment, the hardware used to prevent movement of a secondary catalyst bed away from a primary bed is a ratchet assembly bearing against the secondary catalyst bed to prevent the secondary catalyst bed from moving away from the primary catalyst bed. The ratchet assembly is designed so that it can be adjusted to compensate between uses for compaction or bed degradation in the primary catalyst bed, the adjustment being made by screwing the ratchet assembly tighter against the secondary catalyst bed contained in the aforementioned porous cylindrical canister.

The ratchet assembly includes ratchet teeth adjacent a number of pawl teeth contained in the gas generator housing, thereby allowing the ratchet assembly to be tightened against the secondary catalyst bed, while the ratchet action of the ratchet teeth and pawl teeth prevent the ratchet assembly from withdrawing away from the secondary catalyst bed.

The ratchet assembly may be adjusted quickly and conveniently without disassembling the gas generator. Afer each use of a gas generator, it is necessary to replace a sheer pin sealing the interior of the gas generator from contamination, and the ratchet assembly may be adjusted in a matter of seconds at the time the shear pin is replaced.

It can therefore be seen that all three embodiments of the present invention substantially reduce destructive oscillatory vibration in the gas generator during operation. The one-way travel feature prebiases the catalyst bed(s) and allows the biasing means to be effective in minimizing wear in the catalyst bed(s) during operation of the gas generator.

In fact, when the present invention is utilized in the gas generator, it has been found that the number of uses before it is necessary to replace the catalyst is dramatically increased. At an ambient temperature of 70°F. (21°C), use of the present invention in a gas generator extends the operating life of the gas generator before catalyst replacement is necessary by a factor of 10.

In low ambient temperature operation, particularly important in military aircraft applications, the number of starts ossible is increased from a maximum of 5—10 to a approximately 300, at least a 30-fold increase in the number of uses provided before catalyst replacement is necessary. It should be noted that the substantially increased number of uses are provided without any loss of generator efficiency due to oscillatory vibration.

The present invention has also been designed so that it may be retrofit onto existing gas generators, requiring at most only a relatively minor remachining of the gas generator housing and supplying a few additional parts. With the high cost of replacing the catalyst, the retrofitting operation pays for itself rather quickly given the increase by at least a factor of 10 in the number of multiple starts possible due to the present invention.

It can therefore be seen that the present invention provides an advantageous way of extending the useful life of a gas generator substantially before requiring rebuilding and catalyst replacement, without significant disadvantage. The minimal cost of the device is outweighed by the savings in terms of extended catalyst life, reduced rebuilding labour requirements, and aircraft downtime due to gas generator replacement. Adjustment of the first and third embodiments required only a few seconds, and may be done during routine aircraft maintenance to replace the shear pin in the gas generator, a standard operation performed with existing gas generators.

The invention includes an emergency power unit including a generator as defined and having means for providing controlled flow of a fluid under pressure to the catalyst bed.

The invention also includes a method of generating gas in a generator as defined in which the locking means is periodically adjusted.

The invention may be carried into practice in various ways, and certain embodiments will now be described by way of example with reference to the accompanying drawings in which:-

FIGURE 1 is a partially schematic partially cross section elevational view of an emergency power unit embodying the present invention;

FIGURE 2 is a perspective view of the load nut;

FIGURE 3 is a perspective view of the jam nut;

FIGURE 4 is a perspective view of the support plate against which the load nut bears;

FIGURE 5 is an enlarged fragmentary view of a portion of Figure 1 and showing the adjustment operation;

FIGURE 6 is a partially schematic, partially cross-sectional elevational view of an emergency power unit embodying the principles of the present invention;

FIGURE 7 is a fragmentary transverse cross-sectional view of the support cover;

FIGURE 8 is an enlarged elevational cross-sectional view of the locking means of the present invention;

FIGURE 9 is a cutaway view of a gas generator embodying the present invention;

FIGURE 10 is a plan view of the injector assembly used in the gas generator shown in Figure 9;

FIGURE 11 is an end view of the ratchet assembly shown from the side in Figure 9, and illustrates the ratchet support legs which act against the secondary catalyst bed in Figure 9;

FIGURE 12 shows the opposite end of the ratchet assembly shown in Figure 11, and illustrates the ratchet teeth;

FIGURE 12A is an enlarged view of one of the ratchet teeth contained in the ratchet assembly shown in Figure 12;

FIGURE 13 is a cutaway view showing the pawl teeth contained in the housing of the gas generator shown in Figure 9;

FIGURE 14 is a plan view of the support plate used in the gas generator of Figure 9; and

FIGURE 15 is a plan view of a cover plate of the type, used in the gas generator shown in Figure 9.

## THE FIRST EMBODIMENT

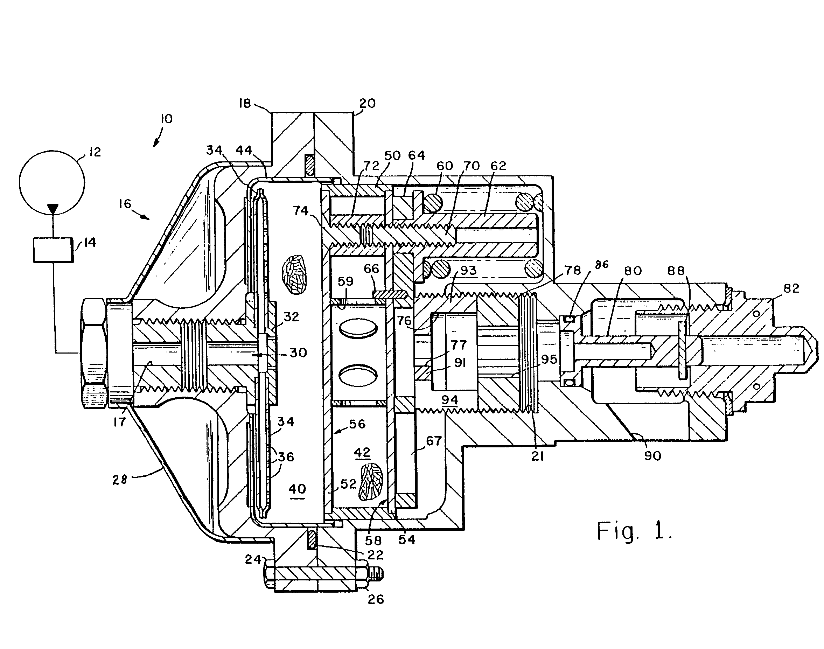

An emergency power unit 10 incorporating the present invention is shown in Figure 1 and includes a source 12 of pressurized liquid hydrazine and a control 14 (which may be responsive to electrical command inputs) for producing a pulsed, pressurized liquid flow delivered to a gas generator 16. The gas generator 16 includes left and right housing halves 18 and 20, respectively, which are sealed by a metal O-ring 22 and held together by a number of bolts 24 and nuts 26 around the perimeters of the housing halves 18, 20.

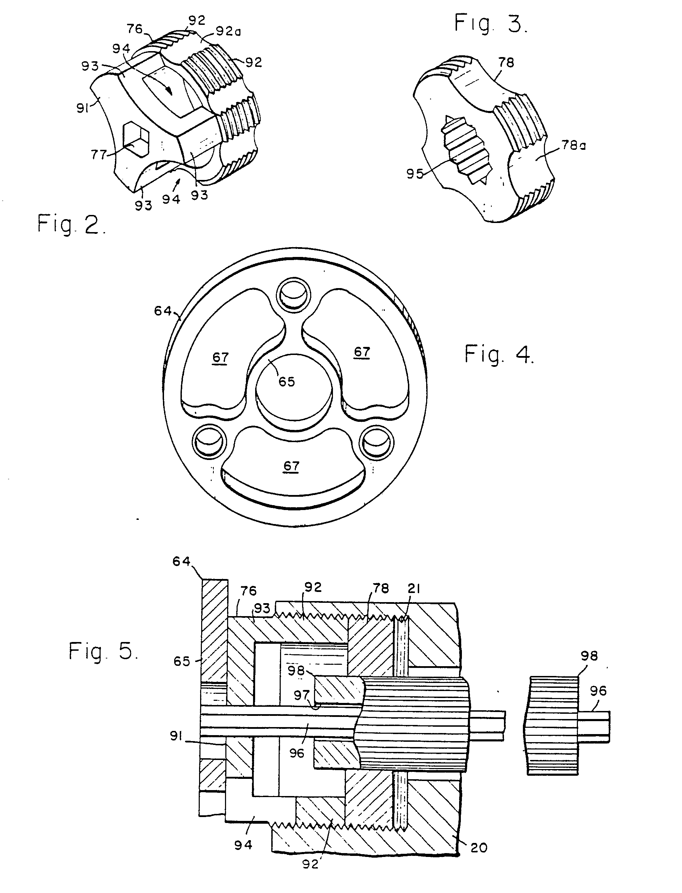

Liquid hydrazine is supplied to the gas generator 16 through a hydrazine supply path 17, which is connected to the left housing half 18, which also includes a cover plate 28 to reduce the radiated heat from the housing 18. The liquid hydrazine is introduced into the gas generator 16 through an injector assembly 30, shown in Figures 1 and 2. The injector assembly 30 includes an injector housing 32 from which a number of spray arms 34 extend. In each of the spray arms 34 a number of nozzle apertures 36 are drilled, and it is through these nozzle apertures 36 that the liquid hydrazine is sprayed into the interior of the gas generator 16.

The location and configurations of the catalyst beds are illustrated as a primary catalyst bed 40 and a secondary catalyst bed 42. The catalyst used is preferably Shell 405 catalyst, which are 14—18 mesh granules. The primary catalyst bed is adjacent the injector assembly 30 at the left end of the gas generator 16 as illustrated in Figure 1, and the catalyst granules of the primary catalyst bed 40 are contained in a primary catalyst canister 44 located in the left housing half 18.

The secondary catalyst bed 42 includes a porous cylindrical canister 50 with the catalyst restrained within the catalyst cylinder 50 by identical perforated cover plates 52, 54 at its ends.

The catalyst granules in the secondary catalyst bed 42 are kept inside the cover plates 52, 54 by two screens 56, 58, which are located within the catalyst cylinder 50 on the inside of the cover plates 52, 54, respectively. The screen 56 prevents catalyst particle migration from the primary catalyst bed 40 into the secondary catalyst bed 42, and vice versa. The screen 58 prevents catalyst particle migration from the secondary catalyst bed 42 out of the gas generator 16.

While the catalyst cylinder 50 supports the cover plates 52, 54 at their outer perimeters, a cylindrical cover support ring 59 is used between the cover plates 52, 54 to support the cover plates 52, 54 at a location nearer the centre. The cover support ring 59 has a number of apertures therein to allow for gas flow within the gas generator 16.

The gas generator 16 uses a number of springs 60 to bias the secondary catalyst bed 42 and its enclosure against the primary catalyst bed 40. In the preferred embodiment illustrated herein, three springs 60 are used, although only one spring 60 is shown in Figure 1. The springs 60 bear against the interior of the housing 20, and exert a bias on the secondary catalyst bed 42, through spring guides 62 extending within the springs 60, which in turn bear on a support plate 64 adjacent the cover plate 54 which comprises a portion of the apparatus enclosing the secondary catalyst bed 42. To centre cover support ring 59, a number of pins 66 through the cover plate 54 and the support plate 64 are used.

The secondary catalyst bed 42 and its enclosure, the support plate 64, and the spring guides 62 are held together in a unit assembled prior to installation in the housing 20 of the gas generator 16. A number of tie bolts 70 threaded into the spring guides 62 and through the support plate 64 and the cover plate 54 are threaded into spacers 72 within the secondary catalyst bed 42. Screws 74 are then inserted through the cover plate 52 and into the spacers 72 to complete the assembly, which may be then placed into the housing 20.

A poppet 80 is slidably mounted in the housing 20, the end of the poppet 80 extending into a guide assembly 82 screwed into the housing 20. The poppet 80 also includes an O-ring 86 to seal the interior of the gas generator 16 from contamination, and a shear pin 88 to hold the poppet 80 in the position shown in Figure 1 when the gas generator 16 is not in use.

When the gas generator 16 is started, gas generated within the gas generator 16 will push the poppet 80 rightwardly into the guide assembly 82, shearing the shear pin 88, which is typically nylon or some other soft material. The poppet valve will thus move to an open position allowing gas to exit the gas generator 16 through the gas exit aperture 90.

The basic components of the present invention which prevent destructive oscillatory vibration within the gas generator 16 are a load nut 76 and jam nut 78 shown both in Figure 1 and in perspective in Figures 2 and 3. The load nut 76 is carried on the threaded internal bore 21 of a central boss on housing 20 in Figure 1, with an end surface bearing tightly against the support plate 64 and through the secondary catalyst bed 42 to prevent destructive oscillatory vibration of the catalyst in the primary catalyst bed 40. To prevent rightward travel of load nut 76 on the threads of the housing, the jam nut 78 is advanced leftwardly into firm, locking engagement with load nut 76 such that the frictional force between the contacting surfaces of the nuts prevents both nuts from rightward travel.

Load nut 76 includes a hexagonal central aperture 77 on the leftward portion 91 thereof which is spaced from a threaded segment 92 by a plurality of axial legs 93 between which are presented openings 94 through which flows the exhausting motive gas flow. Likewise, jam nut 78 includes a large central aperture 95 of multi-sided, polygonal configuration through which the exhausting motive gas flows. As clearly shown in Fig. 4, support plate 64 has a central circular portion 65 upon which portion 91 of load nut 76 bears, and a plurality of apertures 67 for carrying the exhaust flow.

Load nut 76, as shown in Fig. 2, has its threaded segment 92 scalloped to present dish-like depressions 92a. Similarly, the outer threaded periphery of jam nut 78 includes dish-like depressions 78a. Scalloped depressions 78a and 92a have been found to further increase gas generator life inasmuch as any fine dust of catalyst material which is created and becomes deposited on the threaded portions of the nuts will have escape openings so that the motive gas flow will tend to reduce entrainment of the dust on the threads. This reduces the tendency of galling of the threads and permits a greater number of adjustments thereof to improve the overall life of the gas generator.

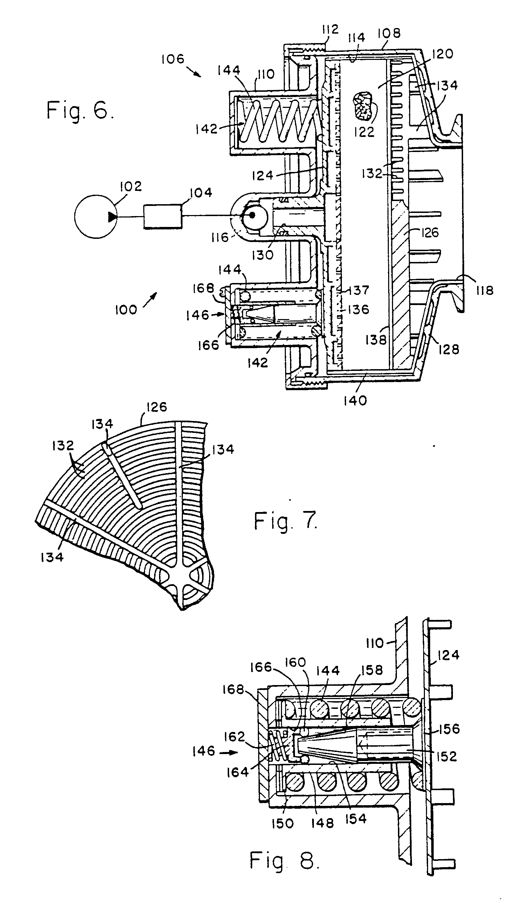

Assembly and adjustment operations of the load and jam nuts are illustrated in Fig. 5. After removal of guide assembly 82 and poppet 80, a pair of concentric polygonal, torque tubes or wrenches 96 and 98 may be inserted inside housing 20. Wrenches 96, 98 respectively have outer surfaces for engaging hexagonal aperture 77 and polygonal aperture 95, and outer tool 98 has a central through bore 97 for slidably receiving inner tool 96.

Upon assembly, outer wrench 98 is held against rotation while inner wrench 96 is rotated to advance portion 91 of load nut 76 leftwardly into the desired loaded engagement with support cover 64. Then, wrench 96 is held against rotation while outer wrench 98 is rotated to advance jam nut 78 leftwardly against the load nut. Tools 96, 98 are extracted, and poppet 80 and guide assembly 82 mounted upon housing 20 to complete assemblage.

Adjustment of the load nut and jam nut is required after an operation of the emergency power unit. More particularly, the unit 10 is energized by appropriate command signals to control 12 to deliver the pulsed, pressurized liquid hydrazine flow to the catalyst beds 40, 42 for reaction therein to generate the motive discharge gas flow. This axial flow tends to induce axial vibration of the catalyst. However, the load nut and jam nut effectively preclude movement of the catalyst and their containers in a rightward direction, thus inhibiting vibration of the bed.

After the gas generator 16 has been operated, when the aircraft has returned to the ground for maintenance the shear pin 88 is normally replaced after removing the guide assembly 82 and the poppet 80. At this time, the wrenches 96, 98 may be inserted into the apertures 77 and 95 so that the load nut 76 may be tightened against the support plate 64, thus compensating for catalyst bed compaction and degradation in the primary bed. Jam nut 78 is then tightened against the load nut to lock the latter in place as described previously. Design of the invention has made it possible for a retrofit operation on existing gas generators. By machining threads into the boss on housing 20, and inserting the load and jam nuts 76, 78, the invention is readily incorporated without even modification of poppet 80.

THE SECOND EMBODIMENT

Referring now to Figures 6-8, an emergency power unit generally designated by the numeral 100 includes a source 102 of pressurized liquid hydrazine, a control including an electrical control unit 104 for developing a pressurized flow of the liquid hydrazine (the control being capable of varying the rate of the liquid flow), and a gas generator generally denoted by the numeral 106. Generator 106 includes a housing comprised of a body 108, an end wall 110, and a nut ring 112 rigidly intersecting the end wall 110 and body 108 to define a central cavity 114 within the housing. An inlet 116 in the housing receives the flow of pressurized liquid, and an exhaust 118 carries motive gas discharge flow from the gas generator. Inlet 116 extends through the end wall 110 which presents one transverse end wall of the housing, while outlet 118 extends from central cavity 114 through another transverse end wall 128 as presented by the rightward side of body 108. Thus, the liquid inlet flow is delivered from inlet 116 to flow generally axially through cavity 114 toward outlet 118.

Disposed within cavity 114 is a porous bed 120 comprised of granular catalyst material 122. As shown partially in Fig. 6, the catalyst material comprises granules or silvers of catalyst material compacted within a confined space. The bed has sufficient porosity to permit flow of the inlet liquid therethrough without substantial pressure drop thereacross. The catalyst material is operable to chemically react with the liquid hydrazine to generate heat and transform the liquid into a higher energy, hotter motive gas flow which is then discharged through exhaust or outlet 118.

Bed 120 is surrounded by a container defined by a first transverse container wall comprising a support cover 124 located adjacent end wall 110 of the housing, and a second transverse container wall comprising a support cover 126 disposed between the catalyst bed with support legs 134 extending into support engagement with the transverse end wall portion 128 of body 108. Support cover 124 includes a central aperture 130 for carrying of the liquid flow from inlet 116 to cavity 114, while the other support cover 126 has a plurality of circular concentric apertures 132 therein for permitting the motive gas flow from bed 120 to pass to outlet 118. Openings 132 clearly illustrated in Fig. 7, provide a substantial open area in support cover 126. Interposed between support cover 124 and bed 120 is a screen or filter 136 having a plurality of apertures or spray nozzles 137 therein for uniformly distributing the inlet liquid hydrazine flow across the face of bed 120. Preferably filter screen 136 is tack welded upon support cover 124. Similarly, a filter screen 138 is disposed between the opposite side of bed 120 and support cover 126. Completing the container for bed 120 is a thin, axially extending sleeve 140 secured to cover 124 and overlapping the end of support cover 126.

End wall 110 is configured with a plurality of equally spaced cup-like zones 142 disposed circularly about the central axis of aperture 130. Each zone 142 contains a coil biasing spring 144 which extends between the leftward, transverse end of wall 110 and the support cover 124 so as to bias the entire bed and container assembly surrounding the bed 120 generally rightwardly in Fig. 6. This, of course, urges support cover 126 into firm supporting contact with the end wall portion 128 of body 108.

Associated with at least one of the springs 144, and preferably associated with three of springs 144 spaced equidistantly about the central axis of the gas generator, is a locking assembly for preventing leftward movement of the porous bed 120. One such locking assembly 146 is illustrated in Fig. 6 and in greater detail in Fig. 8. Assembly 146 includes a sleeve 148 disposed within the central interior of spring 144, having an end flange portion 150 which is captured between the end wall 110 and coil spring 144. Thus, spring 144 holds sleeve 148 securely to end wall 110. Assembly 146 further includes a pin 152 which is slidably received within an internal through bore 154 of sleeve 148. Pin 152 also includes an end flange section 156 captured between the other end of coil spring 144 and support cover 124. Thus coil spring 144 biases pin 152 rightwardly into engagement with and movement with support cover 124. Pin 152 further includes a tapered end section 158 located within internal bore 154 of sleeve 148.

Locking assembly 146 includes a locking element in the form of a plurality of small steel balls 160 disposed in locking interengagement with tapered surface 158 of pin 152 and the internal bore 154 of sleeve 148. Steel balls 160 are urged rightwardly into such locking interengagement by light biasing spring 162 which acts through a retainer 164. Preferably, end wall 110 may have an appropriate opening 166 covered by an end cap 168 which is releasably secured to end wall 110 to permit access within zone 142, and more particularly to permit final assembly of balls 160, spring 162 and retainer 164 as a final step in assemblying the locking means 146.

The light biasing spring 162 needs to exert a minor rightward force to urge balls 160 into locking, frictional interengagement with the slightly tapered surface 158 and the internal bore 154. When so urged rightwardly, the steel balls effectively lock the sleeve 148 to pin 152 to prevent leftward movement of pin 152 relative to sleeve 148. At the same time, however, pin 152 may shift rightwardly, following rightward movement of the catalyst bed, since the tapered surface 158 may be withdrawn rightwardly from the steel balls 160. Upon such occurrence, however, the biasing force of spring 162 urges retainer 164 and balls 160 to follow the rightward movement of pin 152 and thus lock the pin into its new, more rightward position upon completion of the described rightward movement. Since the balls 160 follow the travel of pin 152, the pin 152 is still constrained against leftward movement relative to sleeve 148. Thus, it can be seen that the locking assembly 146 is automatically extensible in axial length in response to rightward movement of the catalyst bed 120 and support cover 124 so as to maintain the locking interengagement preventing and inhibiting leftward movement of the catalyst bed.

In operation, the emergency power unit 100 may be utilized in an aircraft to provide emergency power for starting a main engine or other necessary power in the event of an emergency. The unit 100 is energized by appropriate command controls to unit 104 to develop a flow of pressurized liquid hydrazine into inlet 116 to be distributed across and flow axially through bed 120. The liquid hydrazine chemically reacts with the catalyst bed to generate a hot motive gas flow which is exhausted through outlet 118 to be delivered to an appropriate fluid motor for developing rotary mechanical power. It has been found that the liquid flow passing axially through the porous bed sets up axial vibration of the granular catalyst material therewithin. As described, such axial vibration has been found to dramatically limit the effective life of catalyst material by tending to grind the pellets of catalyst material into a fine powder.

The action of locking assembly 146, however, prevents the tendency of the porous bed of catalyst material to vibrate axially to dramatically increase the life thereof. More particularly, as axial motion of the catalyst bed occurs rightwardly, the steel balls 160 follow rightward movement as described previously to maintain the locking interengagement between tapered surface 158 and internal bore 154. Because of the locking interengagement, leftward movement of the bed of porous granular catalyst material is effectively prohibited. As a result, vibration in an axial direction of the porous bed is effectively eliminated.

The emergency power unit is, obviously, used only for a short period of time and only in emergency situations. After exhaust of the source of liquid hydrazine, it is conventionally required to resupply the liquid hydrazine in ground operation prior to reuse of the emergency power unit. Also, during a single use of the emergency power unit, some compaction of the porous bed of granular catalyst material 120 normally occurs. Since this effectively reduces the axial width of the porous bed, the springs 142 are included to automatically compensate for the reduced axial width to permit reuse of the catalyst material. However, as noted previously the inclusion of the springs and their biasing force tend to inhibit the axial vibration of bed 120. With the inclusion of locking assembly 146 afforded by the present invention such axial vibration and any enhancement thereof is effectively precluded. The locking assembly 146 operates automatically in response to any reduction in axial width of the porous bed due to compaction thereof so as to extend automatically rightwardly so that no internal adjustment of the device is required after an initial use to maintain the locking action thereof. Thus, it will be seen that the emergency power unit 100 may be repeatedly used without any servicing of the interior thereof.

It has been found that by virtue of the automatic extension of the locking assembly 146, sufficient liquid hydrazine may be maintained as a source to permit more than one use of the emergency power unit in a single aircraft operation. This permits for example, an emergency power start on the ground of the main engines of the aircraft, and a second, subsequent in-flight emergency engine start. Many of these cycles may be performed without requiring that the catalyst bed be serviced. It will be clear that the device may be readily retrofitted into existing emergency power unit designs. At the appropriate zones 142, the opening 166 is drilled through wall 110 and cover 168 secured thereacross. Additionally, upon assembly the locking means 146 are installed i.e., the sleeve 148, pin 152, balls 160, spring 162, and retainer 164. The locking means fit within the existing space so that no further modification is required.

THE THIRD EMBODIMENT

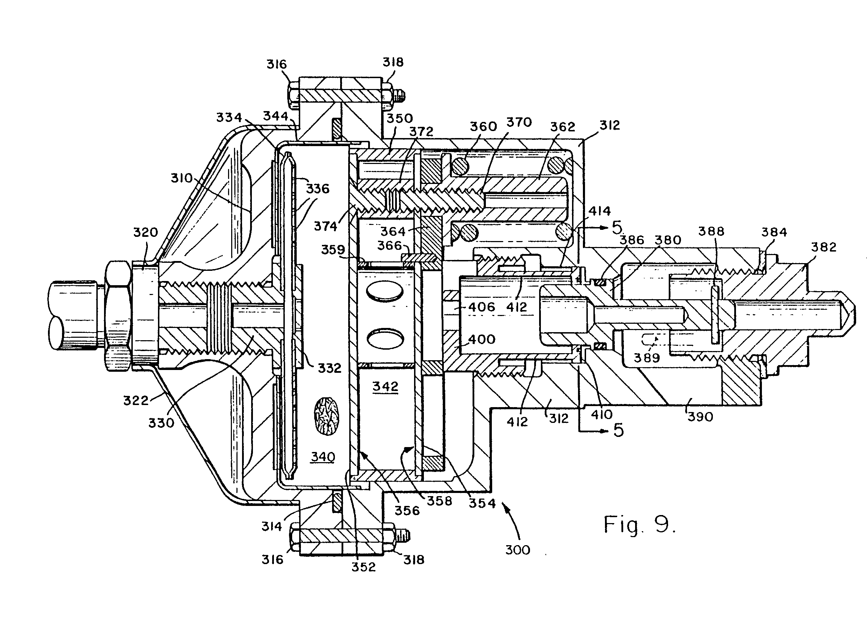

A gas generator 300 incorporating the present invention is shown in Figure 9. The gas generator 300 includes left and right housing halves 310 and 312, respectively, which are sealed by a metal O-ring 314 and held together by a number of bolts 316 and nuts 318 around the perimeters of the housing halves 310, 312.

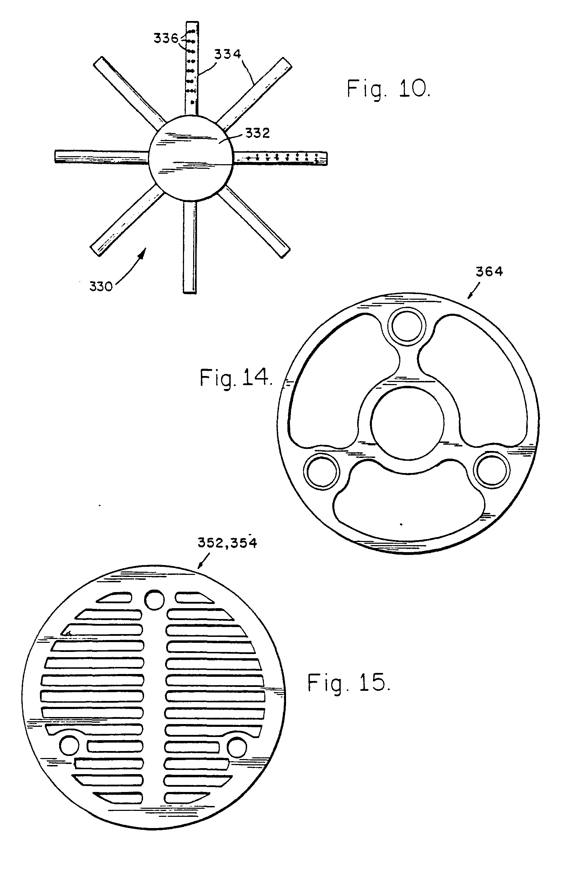

Liquid hydrazine is supplied to the gas generator 300 through a hydrazine supply hose 320, which is connected to the left housing half 310, which also includes a cover plate 322 to reduce the radiated heat from the housing 310. The liquid hydrazine is introduced into the gas generator 300 through an injector assembly 330, shown in Figures 9 and 10. The injector assembly 330 includes an injector housing 332 from which a number of spray arms 334 extend. In each of the spray arms 334 a number of nozzle apertures 336 are drilled, and it is through these nozzle apertures 336 that the liquid hydrazine is sprayed into the interior of the gas generator 300.

Returning to Figure 9, the location and configuration of the catalyst beds are illustrated. The catalyst used is preferably Shell 405 catalyst, which are 14—18 mesh granules, and the catalyst is located in two catalyst beds, a primary catalyst bed 340 and a secondary catalyst bed 342. The primary catalyst bed is adjacent the injector assembly 330 at the left end of the gas generator 300 as illustrated in Figure 9, and the catalyst granules of the primary catalyst bed 340 are contained in a primary catalyst canister 344 located in the left housing half 310.

The secondary catalyst bed 342, as mentioned before, is contained in a porous cylindrical canister 350 which acts to confine the catalyst by two cover plates 352, 354 located at the two ends of the catalyst cylinder 350. The cover plates 352, 354 are identical, and have a number of apertures therethrough as illustrated in Figure 15.

Referring once again to Figure 9, the catalyst granules in the secondary catalyst bed 342 are kept inside the cover plates 352, 354 by two screens 356, 358, which are located within the catalyst cylinder 350 on the inside of the cover plates 352, 354 respectively. The screen 356 prevents catalyst particle migration from the primary catalyst bed 340 into the secondary catalyst bed 342 and vice versa. The screen 358 prevents catalyst particle migration from the secondary catalyst bed 342 out of the gas generator 300.

While the catalyst cylinder 350 supports the cover plates 352, 354 at their outer perimeters, a cylindrical cover support ring 359 is used between the cover plates 352, 354 to support the cover plates 352, 354 at a location nearer the center. The cover support ring 359 has a number of apertures therein to allow for gas flow within the gas generator 300.

The gas generator 300 uses a number of springs 360 to bias the secondary catalyst bed 342 and its enclosure against the primary catalyst bed 340. In the preferred embodiment illustrated herein, three springs 360 are used, although only one spring 360 is shown in Figure 9. The springs 360 bear against the interior of the housing 312, and exert a bias on the secondary catalyst bed 342 through spring guides 362 extending within the springs 360, which in turn bear on a support plate 364 adjacent the cover plate 354 which comprises a portion of the apparatus enclosing the secondary catalyst bed 342. To center the cover support ring 359 a number of pins 366 through the cover plate 354 and the support plate 364 are used.

The secondary catalyst bed 342 and its enclosure, the support plate 364, and the spring guides 362 are held together in a unit assembled prior to installation in the housing 312 of the gas generator 300. A number of tie bolts 370 threaded into the spring guides 362 and through the support plate 364 and the cover plate 354 are threaded into spacers 372 within the secondary catalyst bed 342. Screws 374 are then inserted through the cover plate 342 and into the spacers 372 to complete the assembly, which may be then placed into the housing 312.

A poppet 380 is slidably mounted in the housing 312, the end of the poppet 380 extending into a guide assembly 382 screwed into the housing 312 with a seal 384. The poppet 380 also includes an O-ring 386 to seal the interior of the gas generator 300 from contamination, and a shear pin 388 to hold the poppet 380 in the position shown in Figure 9 when the gas generator 300 is not in use.

When the gas generator 300 is started, gas generated within the gas generator 300 will push the poppet 380 rightwardly into the guide assembly 382, shearing the shear pin 388, which is typically nylon or some other soft material. The poppet valve will thus move to the position shown in phantom lines 389 in Figure 9, allowing gas to exit the gas generator 300 through the gas exit aperture 390.

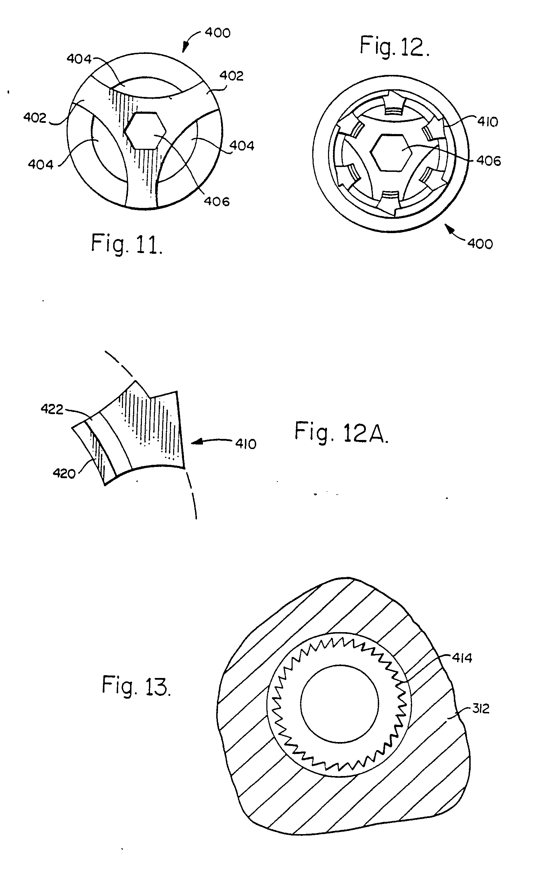

The basic component of the present invention which prevents destructive oscillatory vibration within the gas generator 300 is the ratchet assembly 400 shown in cutaway side view in Figure 9, and end views in Figures 11 and 12. The ratchet assembly 400 is threaded into the housing 312 as shown in Figure 9, and is then backed out of the housing 312 to the left tightly against the support plate 364 and the secondary catalyst bed 342 to prevent destructive oscillatory vibration of the catalyst in the primary catalyst bed 340.

The end of the ratchet assembly 400 bearing against the support plate 364 is best illustrated in Figure 11. The ratchet assembly 400 has three ratchet support legs 402 which present a flat surface to the support plate 364 (Figures 9 and 14). The support legs 402 are so configured so as to have apertures 404 between these support legs 402 and the side of the ratchet assembly 400. In addition, a hex head aperture 406 in the ratchet support legs 402 is provided for adjustment of the ratchet assembly 400. The ratchet apertures 404 and the hex head aperture 406 allow gas generated in the catalyst beds of the gas generator 300 to pass through the ratchet assembly 400 to the gas exit aperture 390 (Figure 9).

Referring now to Figures 9 and 12, it may be seen that the ratchet assembly 400 has six ratchet teeth 410 mounted on slender ratchet arms 412. The ratchet arms 412 allow for slight inward movement of the ratchet teeth 410 for purposes of installation and adjustment of the ratchet assembly 400, as will be discussed later.

The housing 312 has a number of pawl teeth 414 machined therein, against which the ratchet teeth 410 on the ratchet assembly 400 (Figures 9 and 12) interact. Once the ratchet assembly 400 is threaded into the housing 312, it may only move outwardly against the support plate 364, as shown in Figure 9. The ratchet teeth 410 and the pawl teeth 414 thus prevent the ratchet assembly 400 from moving inwardly into the housing 312 away from the support plate 364.

The installation of the ratchet assembly 400 into the housing 312 is done by restraining the ratchet teeth 410 slightly inwardly so that the ratchet assembly 400 may be screwed into the housing 312. One way of doing this is to provide the surface of the ratchet teeth shown in Figure 12 with a ridge 420 adjacent a valley 422 on the surface of the ratchet teeth 410, as shown in Figure 12a. An elastic band may be tightly wrapped around all of the ratchet arms 412 (Figure 9) to draw the ratchet teeth 410 centrally inward, and a thin cylinder (not shown) may be inserted into the valleys 422 of the ratchet teeth 410 to hold the ratchet teeth 410 in the inwardly restrained position. The rubber band may then be removed from the ratchet arms 412 and the ratchet assembly 400 may then be threaded freely into the housing 312. The thin cylinder (not shown) may then be removed, and the ratchet teeth 410 will spring outwardly against the pawl teeth 414 of the housing 312.

After assembly of the gas generator 300 is complete, the guide assembly 382 and the poppet 380 may be removed from the end of the housing 312, and a hex wrench may be inserted into the hex head aperture 406 (Figure 11) of the ratchet assembly 400 for purposes of adjusting the ratchet assembly 400 tightly against the support plate 364. The poppet 380, along with a shear pin 388 and the guide assembly 382 are then reinserted into the housing 312, and the device is complete.

In the preferred embodiment, the poppet 380 is sized to keep the ratchet teeth 410 firmly against the pawl teeth 414 in the housing 312, as shown in Figure 9. This technique prevents vibration and abrasion of the ratchet teeth 410 against the pawl teeth 414. When the gas generator 300 begins to generate gas, the pressure within the gas generator 300 will force the poppet 380 into the guide assembly 382, fracturing the shear pin 388 and allowing gas to escape through the gas exit aperture 390.

After the gas generator 300 has been operated, when the aircraft has returned to the ground for maintenance the shear pin 388 is normally replaced by removing the guide assembly 382 and the poppet 380. At this time, a hex head wrench may be inserted into the hex head aperture 406 of the ratchet assembly 400, so that the ratchet assembly 400 may be tightened against the support plate 364, thus compensating for catalyst bed compaction and degradation in the primary bed.

By coordinating the selection of the thread pitch on the ratchet assembly 400 and the housing 312 with the number of pawl teeth 414 in the housing 312 the adjustment of the device may be varied. It has been found that an increment of .004 cms per ratchet click is an acceptable adjustment; this means that turning the ratchet assembly 400 one ratchet click will move the support plate 364 and the secondary catalyst bed 342 and its enclosure .004 cms toward the primary catalyst bed 340. The device illustrated in Figure 9 is designed to allow a total adjustment of approximately .9 cms.

Design of the ratchet assembly 400 has made it possible for a retrofit operation on existing gas generators. By machining threads and pawl teeth into the housing 310 of a gas generator, and providing the ratchet assembly 400, the support plate 364, and a different poppet 380 an existing gas generator may be modified to provide the advantages of the present invention.

By utilizing the present invention in its three embodiments described above, substantial advantage over preexisting gas generators is achieved at a remarkably low cost. It has been found that the catalyst in the gas generator will last fully ten times longer with the present invention installed in an ambient operating temperature of 21°C and approximately 300 times longer at ambient temperature of −4.5°C the latter condition being encountered by military aircraft flying at relatively high altitudes. The cost savings achieved by the present invention are therefore substantial, since the catalyst used is very expensive.

In addition, since only a few seconds are necessary to adjust the devices of the first and third embodiments after the gas generator is used (the second embodiment being self-adjusting), and since this may be done at the same time the shear pin is replaced, which is standard operating procedure with gas generators not using the present invention, a substantial amount of labor and time may be saved since the gas generators of the present invention do not have to be rebuilt or have the catalyst replaced nearly as often as pre-existing gas generators. In addition, military aircraft will have less downtime due to work required to be performed on the gas generator.

Since the extra cost accompanying the present invention is more than compensated for by a single replacement of catalyst in the gas generator, it can be seen that the present invention achieves an advantageous cost reduction over preexisting gas generators. This fact, when combined with the extended lifetime and assured dependable performance characteristics of the gas generator including the present invention make the present invention a substantial improvement over preexisting gas generators.

Various modifications to the foregoing description or the preferred embodiments of the invention will be apparent to those skilled in the art. Accordingly, the foregoing should be considered exemplary in nature and not as limiting to the scope and spirit of the invention as set forth in the appended claims.

**Claims**

1. A gas generator having a housing (18, 20; 310, 312; 108) containing a porous bed (40, 340, 120) of granular catalyst material, a wall (52, 352, 124) movable in the housing for confining the catalyst bed, and adjustable locking means (76, 78; 400; 158, 160) for limiting movement of the wall which would allow expansion of the catalyst bed whereby vibration of the wall is inhibited.

2. A gas generator as claimed in Claim 1 in which the wall is mounted for guided axial movement in the housing to tend to compact the catalyst in the catalyst bed.

3. A gas generator as claimed in either of the preceding claims in which the wall (124) defines with the wall of the housing or a wall located in relation to the housing, the catalyst bed space.

4. A gas generator as claimed in any of the preceding claims in which the wall (52, 352) is a wall of a chamber of a second catalyst bed (42, 342) which is movable as an entirety in the housing.

5. A gas generator as claimed in any of the preceding claims including biasing springs (60, 360, 144) acting directly or indirectly against the wall in a sense to compact catalyst in the catalyst bed, and so to confine the catalyst bed.

6. A gas generator as claimed in Claim 5 in which the action of the biasing springs is not impaired by the locking means.

7. A gas generator as claimed in any of the preceding claims in which the locking means is automatically adjustable to follow and to take up movement of the wall in a sense to compact the catalyst in the bed.

8. A gas generator as claimed in Claim 7 including a plurality of coil springs (144) acting between the housing and the plate to tend to compact the catalyst in the catalyst bed, the locking means being disposed centrally within at least one of the coil springs and constituting a axial pin (152) having a tapered surface (158), a sleeve (148) concentrically surrounding the tapered end of the pin and a spring loaded locking element (160) in locking engagement between the interior surface of the sleeve and the tapered surface of the pin.

9. A gas generator as claimed in any of Claims 1—6 in which the locking means is adjustable after use to take up compacting movement of the wall during previous use, and to be relocked.

10. A gas generator as claimed in any of the preceding claims in which the locking means are adjustable without being removed from the housing.

11. A gas generator as claimed in any of Claims 1—6, 9 and 10, in which the locking means comprise a load nut (76) and a jam nut (78) which can be adjusted independently but together by respective spanner means inserted through an opening in the housing.

12. A gas generator as claimed in any of Claims 1—6, 9 and 10 in which the locking means comprise a unit (400) threaded into the housing and capable of adjustment in one sense only by virtue of cooperating ratchet teeth on the housing and the ratchet unit.

13. An emergency power unit for temporarily providing a supply of gas under pressure comprising a gas generator as claimed in any of the preceding claims.

14. An emergency power unit including a gas generator as claimed in any of the preceding claims and having means for providing controlled flow of a fluid under pressure to the catalyst bed with which the liquid can react to generate gas.

15. A method of generating gas by directing a controlled flow of fluid over catalyst in a gas generator as claimed in any of the preceding claims in which the locking means is periodically adjusted to limit movement of a wall in the expansion sense.

16. A method as claimed in Claim 15 in which any movement of the wall in the compacting sense is followed up automatically by the locking means to limit return movement of the wall.

17. A method as claimed in Claim 15 in which after one operation the locking means is adjusted to compact the catalyst to take up any movement of the wall that has become available during the preceding operation.

18. A method of making a gas generator as claimed in any of Claims 1—14 in which a gas generator without the locking means is modified by the inclusion of the locking means.

**Patentansprüche**

1. Gasgenerator mit einem Gehäuse (18, 20; 310, 312; 108), das ein poröses Bett (40, 340, 120) aus granulatförmigen Katalysatormaterial, eine in dem Gehäuse zur Begrenzung des Katalysatorbettes bewegliche Wand (52, 352, 124) und eine einstellbare Sperrvorrichtung (76, 78; 400, 158, 160) zur Begrenzung der Verschiebung der Wand, die eine Expansion des Katalysatorbettes ermöglichen würde aufweist, wodurch eine Vibration der Wand unterbunden wird.

2. Gasgenerator nach Anspruch 1, bei dem die Wand zur geführten axialen Bewegung in dem Gehäuse befestigt ist, um den Katalysator im Katalysatorbett zu verdichten.

3. Gasgenerator nach einem der vorausgehenden Ansprüche, bei dem die Wandung (124) mit der Gehäusewand oder einer in bezug auf das Gehäuse angeordneten Wand den Katalysatorbettraum festlegt.

4. Gasgenerator nach einem der vorausgehenden Ansprüche, bei dem die Wand (52, 352) eine Wand einer Kammer eines zweiten Katalysatorbettes (42, 342) ist, die als Ganzes im Gehäuse verschiebbar ist.

5. Gasgenerator nach einem der vorausgehenden Ansprüche, mit Vorspannfedern (60, 360, 144), die direkt oder indirekt gegen die Wand in einem den Katalysator im Katalysatorbett verdichtenden Sinne wirken und damit das Katalysatorbett begrenzen.

6. Gasgenerator nach Anspruch 5, bei dem die Wirkung der Vorspannfedern durch die Verriegelungsvorrichtung nicht beeinträchtigt ist.

7. Gasgenerator nach einem der vorausgehenden Ansprüche, bei dem die Verriegelungsvorrichtung automatisch so einstellbar ist, daß sie der Verschiebung der Wandung im Sinne des Verdichtens des Katalysators im Bett folgt und diese Verschiebung aufnimmt.

8. Gasgenerator nach Anspruch 7, gekennzeichnet durch eine Vielzahl von Schraubenfedern (144), die zwischen dem Gehäuse und der Platte wirken und die den Katalysator im Katalysatorbett verdichten, wobei die Verriegelungsvorrichtung zentrisch innerhalb mindestens einer der Schraubenfedern angeordnet ist und einen axialen Bolzen (152) mit einer verjüngten Oberfläche (158) darstellt, und wobei eine Hülse (148) konzentrisch das verjüngte Ende des Bolzens und ein federbelastetes Verriegelungselement (160) in Verriegelungseingriff zwischen der Innenfläche der Hülse und der verjüngten Oberfläche des Bolzens umgibt.

9. Gasgenerator nach einem der Ansprüche 1 bis 6, bei dem die Verriegelungsvorrichtung nach ihrer Benutzung einstellbar ist, um eine Verdichtungsverschiebung der Wand während einer vorausgehenden Benutzung aufnimmt, und entriegelbar ist.

10. Gasgenerator nach einem der vorausgehenden Ansprüche, bei dem die Verriegelungsvorrichtung einstellbar ist, ohne daß sie von dem Gehäuse abgenommen wird.

11. Gasgenerator nach einem der Ansprüche 1 bis 6, 9 und 10, bei dem die Verriegelungsvorrichtung eine Spannmutter (76) und eine Gegenmutter (78) aufweist, die unabhängig voneinander, jedoch miteinander durch entsprechende Spannmittel einstellbar sind, welche durch eine Öffnung im Gehäuse einsetzbar sind.

12. Gasgenerator nach einem der Ansprüche 1 bis 6, 9 und 10, bei dem die Verriegelungsvorrichtung eine Einheit (400) aufweist, die in das Gehäuse eingeschraubt ist und die in nur einem Sinn durch Wirkung miteinander zusammenarbeitender Gesperrezähne am Gehäuse und der Gesperreeinheit einstellbar sind.

13. Notbetriebs-Netzteil zum vorübergehenden Bereitstellen eines Druckgasvorrates, mit einem Gasgenerator nach einem der vorausgehenden Ansprüche.

14. Notbetriebs-Netzteil mit einem Gasgenerator nach einem der vorausgehenden Ansprüche und mit einer Vorrichtung, die einen gesteuerten Druckmittelfluß an das Katalysatorbett ergibt, mit dem die Flüssigkeit zur Erzeugung von Gas reagieren kann.

15. Verfahren zum Erzeugen von Gas, indem ein gesteuerter Druckmittelfluß über einen Katalysator in einen Gasgenerator nach einem der vorausgehenden Ansprüche geleitet wird, bei dem die Verriegelungsvorrichtung periodisch auf eine Begrenzung der Verschiebung einer Wand im Expansionssinne eingestellt wird.

16. Verfahren nach Anspruch 15, bei dem auf jede Verschiebung der Wand im verdichtenden Sinne automatisch die Verriegelungsvorrichtung folgt, um eine Rückwärtsbewegung der Wandung zu begrenzen.

17. Verfahren nach Anspruch 15, bei dem nach jedem Arbeitsvorgang die Verriegelungsvorrichtung so eingestellt wird, daß sie den Katalysator verdichtet, damit jede Bewegung der Wand aufgenommen wird, die während des vorausgehenden Arbeitsvorganges verfügbar geworden ist.

18. Verfahren zur Herstellung eines Gasgenerators nach einem der Ansprüche 1 bis 14, bei dem ein Gasgenerator ohne die Verriegelungsvorrichtung durch Einsetzen der Verriegelungsvorrichtung modifiziert wird.

**Revendications**

1. Générateur de gaz comprenant un carter (18, 20; 310, 312; 108) qui contient un lit poreux (40, 340, 120) de catalyseur en grains, une paroi (52, 352, 124) mobile dans le carter pour emprisonner le lit de catalyseur, et des moyens de blocage réglables (76, 78; 400; 158, 160) pour limiter le mouvement de la paroi qui permettrait l'expansion du lit de catalyseur, de sorte que la vibration de la paroi est empêchée.

2. Générateur de gaz suivant la revendication 1, dans lequel la paroi est montée pour un mouvement axial guidé dans le carter, afin de tendre à compacter le catalyseur dans le lit de catalyseur.

3. Générateur de gaz suivant l'une ou l'autre des revendications précédentes, dans lequel la paroi (124) définit, avec la paroi du carter ou une paroi placée en relation avec le carter, l'espace du lit de catalyseur.

4. Générateur de gaz suivant l'une quelconque des revendications précédentes, dans lequel la paroi (52, 352) est une paroi d'une chambre d'un deuxième lit de catalyseur (42, 342) qui est mobile globalement dans le carter.

5. Générateur de gaz suivant l'une quelconque des revendications précédentes, comprenant des ressorts de poussée (60, 360, 144) agissant directement ou indirectement contre la paroi, dans un sens tendant à compacter le catalyseur dans le lit de catalyseur, de manière à resserrer le lit de catalyseur.

6. Générateur de gaz suivant la revendication 5, dans lequel l'action des ressorts de poussée n'est pas gênée par les moyens de blocage.

7. Générateur de gaz suivant l'une quelconque des revendications précédentes, dans lequel les moyens de blocage sont automatiquement réglables pour suivre et compenser le mouvement de la paroi, dans un sens de compactage du catalyseur dans le lit.

8. Générateur de gaz suivant la revendication 7, comprenant une pluralité de ressorts hélicoïdaux (144) agissant entre le carter et la plaque pour tendre à compacter le catalyseur dans le lit de catalyseur, les moyens de blocage étant disposés centralement à l'intérieur d'au moins un des ressorts hélicoïdaux et étant constitués d'une broche axiale (152) qui présente une surface conique (158), d'un manchon (148) qui entoure concentriquement l'extrémité conique de la broche, et d'un élément de blocage poussé élastiquement (160) en contact de blocage entre la surface intérieure du manchon et la surface conique de la broche.

9. Générateur de gaz suivant l'une quelconque des revendications 1 à 6, dans lequel les moyens de blocage sont réglables après utilisation, de manière à compenser le mouvement de compactage de la paroi pendant l'utilisation précédente et à se rebloquer.

10. Générateur de gaz suivant l'une quelconque des revendications précédentes, dans lesquelles les moyens de blocage sont réglables sans être sortis du carter.

11. Générateur de gaz suivant l'une quelconque des revendications 1 à 6, 9 et 10 dans lequel les moyens de blocage comprennent un écrou de mise en charge (76) et un contre-écrou (78) qui peuvent être réglés indépendamment mais ensemble par des clés respectives insérées à travers une ouverture du carter.

12. Générateur de gaz suivant l'une quelconque des revendications 1 à 6, 9 et 10, dans lequel les moyens de blocage comprennent un dispositif (400) vissé dans le carter et qui peut être réglé dans un seul sens grâce à des dents à rochet prévues sur le carter et au dispositif d'encliquetage.

13. Groupe énergétique de secours pour fournir temporairement une alimentation en gaz sous pression, comprenant un générateur de gaz suivant l'une quelconque des revendications précédentes.

14. Groupe énergétique de secours comprenant un générateur de gaz suivant l'une quelconque des revendications précédentes et comportant des moyens pour fournir un flux réglé d'un fluide sous pression au lit de catalyseur avec lequel le liquide peut réagir pour produire un gaz.

15. Procédé de production de gaz par envoi d'un flux réglé de fluide sur un catalyseur dans un générateur de gaz suivant l'une quelconque des revendications précédentes, dans lequel les moyens de blocage sont réglés périodiquement de manière à limiter le mouvement d'une paroi dans le sens de l'expansion.

16. Procédé suivant la revendication 15, dans lequel tout mouvement de la paroi dans le sens du compactage est suivi automatiquement par les moyens de blocage, de manière à limiter le mouvement de retour de la paroi.

17. Procédé suivant la revendication 15 dans lequel, après une opération, on règle les moyens de blocage pour compacter le catalyseur afin de compenser tout mouvement de la paroi qui est devenu possible pendant l'opération précédente.

18. Procédé de fabrication d'un générateur de gaz suivant l'une quelconque des revendications 1 à 14, dans lequel un générateur de gaz ne comportant pas les moyens de blocage est modifié par l'inclusion des moyens de blocage.

Fig. 1.

Fig. 3.

Fig. 2.

Fig. 4.

Fig. 5.

Fig. 6.

Fig. 7.

Fig. 8.

Fig. 9.

EP 0 134 108 B1

Fig. 10.

Fig. 14.

Fig. 15.

Fig. 12.

Fig. 11.

Fig. 12A.

Fig. 13.